# EUROPEAN PATENT APPLICATION

(11) **EP 2 079 046 A1**
(43) Date of publication of application: **15.07.2009**
(21) Application number: 08172329.8
(22) Date of filing: 19.12.2008
(51) Int. Cl.: G06Q 30/00

(54) **Systems and methods for facilitating electronic commerce**

(30) Priority: 31.12.2007 US 967608
(71) Applicant: Nokia Corporation, 02150 Espoo (FI)
(72) Inventor: Sihvola, Tuomo, 02940 Espoo (FI); Saarimaa, Tero-Markus, 00530 Helsinki (FI); Aarnio, Ari, 02210 Espoo (FI)
(74) Representative: Tognetty, Virpi Maria

(57) **Abstract**

In electronic commerce, a user profile may be used to determine one or more product recommendations. The user profile may be selectable so that a first user may receive product or service recommendations for a second user associated with the user profile. Additionally or alternatively, price quotes may be solicited from a plurality of providers in an attempt to obtain the best price for a consumer. Profiles may be generated in a variety of ways including tracking user actions. Interests may be inferred from such user actions and may further be weighted based on various methodologies.

## Description

Aspects of the invention generally relate to electronic commerce. In particular, aspects are directed to providing product recommendations to potential customers and sharing revenue among service and product providers in on-line markets.

### BACKGROUND

In current electronic business models, profiles are often generated for consumers without them ever knowing. A consumer's actions including purchasing, browsing and chatting may be tracked and saved to a consumer profile so that a service provider, advertiser or other entity may gain an edge in marketing to the consumer. Accordingly, consumers typically have very little control over their own profiles and the recommendations and advertisements that are sent to them. In some instances, a profile creation process may also be poor and thus, the profiles and the recommendations made based thereon may poorly reflect the actual interests of a consumer. Additionally, consumers are often locked in to shopping under their own profile. Oftentimes, they must be able to log-in to another user's account or have access to the other user's terminal or device in order to receive recommendations geared toward the other user's interests.

### BRIEF SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods and systems for allowing a user to select a profile for shopping or browsing are described. A user may receive or obtain another user's profile in a variety of ways including e-mail, direct transmissions between devices, short messaging systems (SMS), multimedia messaging systems (MMS), user's community or user's social network and the like. User profiles may also be obtained from a server (e.g., a commerce server) if the commerce server has the requested profile stored. Once obtained, a first user may select a profile of a second user for shopping on-line through a communication terminal. With the second user's profile selected, a first user may receive recommendations and advertisements that are directed to the interests of the second user, rather than his/her own (although some overlap might exist). In one or more configurations, advertisements may be selected by a server according to a selected profile. Thus, a selected advertisement might not be directed to the interests of a user of terminal, but rather may be directed to the interests of a user whose profile has been selected on the terminal. The first user may also switch back to his or her own profile so that product recommendations, advertisements and the like are geared toward his or her interests. Users may specify shareable and non-shareable portions of their profile to keep some information private. Using selectable profiles allows a user to shop for another user without having to have an account and password of the other user or access to the other user's device.

According to another aspect, a commerce server configured to facilitate electronic commerce between terminals and service providers may provide product and service recommendations based on a user profile and a service provider profile. In one configuration, the commerce server may be configured to make product recommendations based on a service provider profile associated with a product. In particular, the service provider profile may store or identify other products or services in which purchasers of a particular product have typically been interested. The recommendations determined based on the service provider profile may be filtered using a user's profile (e.g., the user's interests) to allow the user to assert some level of control over what recommendations are given.

According to yet another aspect, profiles may be created based on a variety of user actions. User actions may include bookmarking a website, site navigation, selecting a link, purchasing a product, reading a Really Simple Syndication (RSS) news feed, bookmarking a widget, selecting an advertisement and the like. User actions may be tracked by a commerce server and stored to a user action database in association with the user or a terminal. The user action database may then be used to generate a profile of interests and other information based on the user actions. Weights may also be assigned to the various user actions and interests based on a variety of weighting mechanics. In one example, weights may be assigned based on a position a page or site holds in a navigation hierarchy. In other words, the deeper a page is within a site, the more weight the accessing of that page is assigned. In another example, weights may be assigned based on content type (e.g., music, ticketed events, videos, purchases, news, widgets, etc.), a context (e.g., shopping for my kid, shopping for myself, shopping for my parents) and/or an action type (e.g., bookmarking, purchasing, reading, playing). Weights for a hierarchy or an action type may be predefined by the commerce server, specified by a user or a combination thereof.

According to another aspect, a commerce server may obtain price quotes from a plurality of service or product providers for a product or service that a user wants to purchase. A user may thus purchase the product from a service provider with the most desirable price. Additionally or alternatively, if a user initially requests to purchase a product from a first site, but later decides to purchase the product from a second site identified in the price quotes, revenue may be shared between the first and second sites. For example, the first site may receive a redirect or referral fee or share of the revenue.

According to another aspect, friends in user's social network may be classified or categorized differently. That is, profiles may be classified according to different levels such as spouse level, children level, family level, co-worker level, friend level and the like. In one example, hobbies and work may correspond to different levels. These levels may determine the right of the group or user to use or view a user's profile. In another aspect, a contact list and/or address book can also include information of the right to use other's profiles.

### BRIEF DESCRIPTION OF THE DRAWINGS

Certain embodiments are illustrated by way of example and not limited in the accompanying figures in which like reference numerals indicate similar elements and in which:

FIG. 1 illustrates a block diagram of a communication network in which one or more embodiments may be implemented.

FIG. 2 illustrates a block diagram of a communication device according to one or more aspects described herein.

FIG. 3 illustrates a block diagram of a system for facilitating electronic commerce according to one or more aspects described herein.

FIG. 4 is a block diagram illustrating a user profile according to one or more aspects described herein.

FIG. 5A illustrates a user interface for managing and creating profiles according to one or more aspects described herein.

FIG. 5B illustrates a share management interface for controlling an amount of information that is shared in a profile.

FIG. 6 is a flowchart illustrating a method for generating product or service recommendations based on a user profile and, optionally, a service/product provider profile according to one or more aspects described herein.

FIG. 7 illustrates a system for sharing and selecting user profiles for use in electronic commerce according to one or more aspects described herein.

FIG. 8 illustrates a user interface for selecting profiles to be used for electronic commerce according to one or more aspects described herein.

FIG. 9 illustrates a method for determining recommendations based on multiple profiles according to one or more aspects described herein.

FIG. 10 illustrates a user interface for displaying product recommendations and price quotes according to one or more aspects described herein.

FIG. 11 illustrates a method for tracking user actions and generating a user profile based on user actions according to one or more aspects described herein.

FIG. 12 illustrates one system for weighting sites visited by a user based on a hierarchy of the sites or pages within a site according to one or more aspects described herein.

FIG. 13 illustrates a method for weighting user actions based on context and an action type according to one or more aspects described herein.

FIG. 14 illustrates another weighting table including a type of action, an example of usage, a weight index and a content type according to one or more aspects described herein.

FIG. 15 illustrates a user interface for managing the tracking of user actions and their associated weights according to one or more aspects described herein.

### DETAILED DESCRIPTION

In the following description of the various embodiments, reference is made to the accompanying drawings, which form a part hereof, and in which are shown by way of illustration various embodiments in which the invention may be practiced. It is to be understood that other embodiments may be utilized and structural and functional modifications may be made without departing from the scope of the present invention.

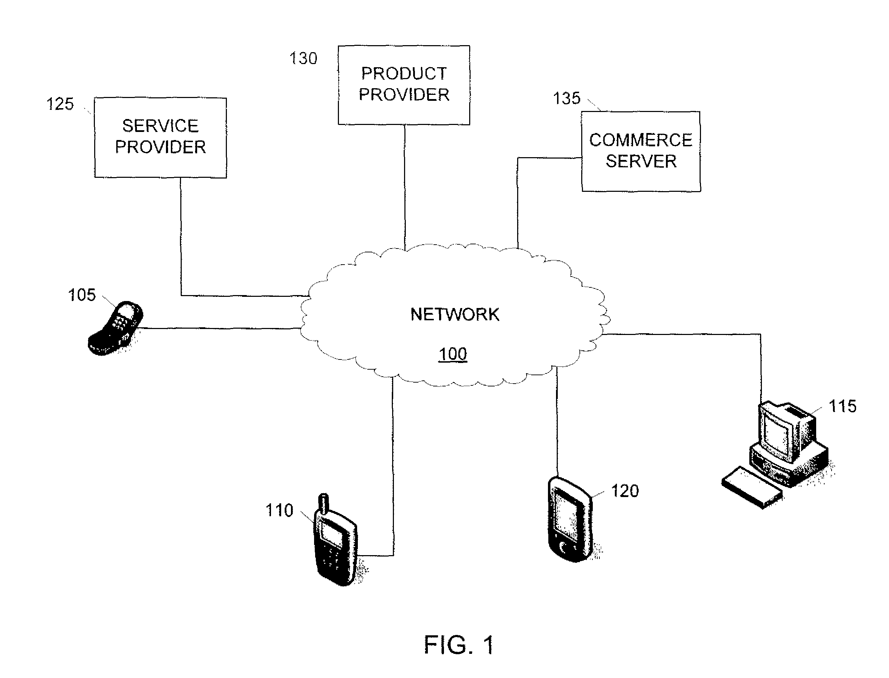

Various embodiments may be used in a broad array of networks and communication protocols. FIG. 1 illustrates an example of a communication network through which data may be exchanged according to one or more aspects described herein. Specifically, communication network 100 includes mobile communication devices 105 and 110, personal computer (PC) 115 and personal data assistant (PDA) 120, service provider 125, product provider 130 and commerce server 135. PC, as used herein, is not limited to any particular operating system or platform. Communication through network 100 is not limited to the illustrated devices and may include other apparatuses such as a home video storage system, a portable audio/video player, a digital camera/camcorder, a positioning device such as a GPS (Global Positioning System) device or satellite, a mobile television, a STB (Set-top Box), a digital video recorder, and the like and in any combination of the aforementioned.

Service provider 125 and product provider 130 may each be configured to provide various services and products, respectively. For example, service provider 125 may include a website for providing personal storage space on the Internet while product provider 130 may include a website that sells books. In one or more arrangements, product provider 130 and service provider 125 may be parts of a single combined provider. Commerce server 135, on the other hand, facilitates electronic commerce between devices 105, 110, 120 and 115 and each of providers 125 and 130. Commerce server 135 may, for example, be configured to provide product or service recommendations, store user profiles or obtain price quotes from a plurality of service or product providers on a consumer's behalf.

Devices 105, 110, 115 and 120 may be connected to each other through various types of networks. For example, mobile communication devices 105 and 110 may communicate with one another through a cellular network, a short range communication connection (such as a Bluetooth®, UWB (Ultra Wide Band), infrared, WiBree), a wireless local area network (WLAN) or a high-speed wireless data network, e.g., Evolution-Data Optimized (EV-DO) networks, Universal Mobile Telecommunications System (UMTS) networks or Enhanced Data rates for GSM Evolution (EDGE) networks. In one or more arrangements, mobile communication devices 105 and 110 and other devices like PC 115 and PDA 120 may communicate through a wired network. Further, devices 105, 110, 115 and 120 may use various communication protocols such as Internet Protocol (IP), Transmission Control Protocol (TCP), Simple Mail Transfer Protocol (SMTP) among others known in the art.

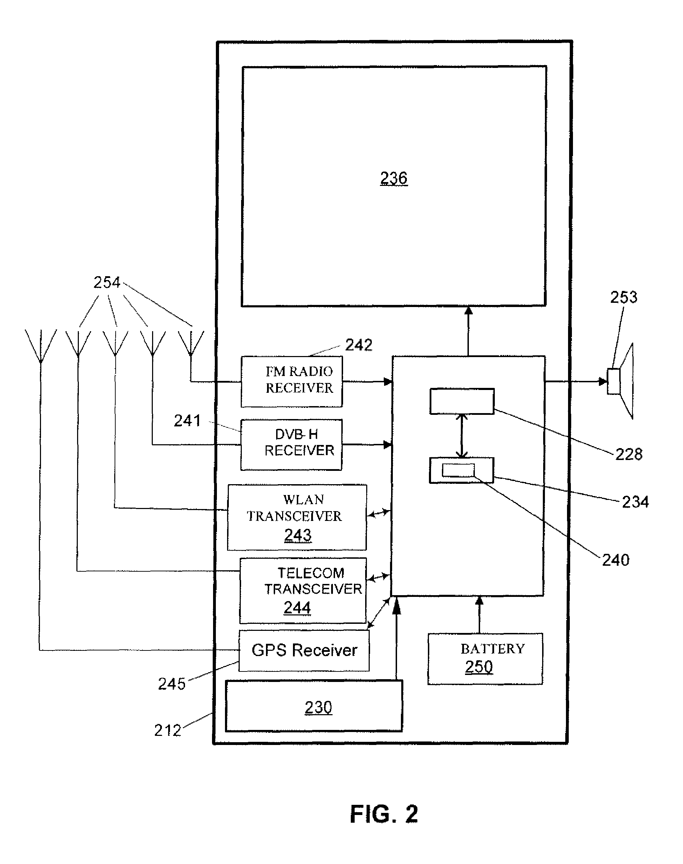

FIG. 2 is a block diagram of a communication device such as mobile communication device 105 including processor 228 connected to user interface 230, memory 234 or other storage, and display 236. Communication device 212 may also include battery 250, speaker(s) 253 and antennas 254. User interface 230 may further include a keypad, touch screen, voice interface, one or more arrow keys, joy-stick, data glove, mouse, roller ball, or the like. Communication device 212 may comprise a computer, PDA, mobile telephone and the like. User interface 230 may be configured to receive user input, e.g., corresponding to a selecting a user profile (as discussed in further detail below).

Computer executable instructions and data used by processor 228 and other components within communication device 212 may be stored in a computer readable memory 234. Memory 234 may further store various data such as user profiles, usage history or statistics, product recommendations and the like. The memory may be implemented with any combination of read only memory modules or random access memory modules, optionally including both volatile and nonvolatile memory. Software 240 may be stored within memory 234 or storage to provide instructions to processor 228 for enabling communication device 212 to perform various functions. Alternatively, one or more modules of communication device 212 may be embodied in hardware or firmware (not shown).

Communication device 212 may be configured to receive, decode and process digital radio or television broadcast transmissions that are based, for example, on the DVB (Digital Video Broadcasting) standards, through a specific DVB receiver 241. The mobile device may also be provided with other types of receivers for digital broadcast transmissions, such as ATSC (Advanced Television Systems Committee), MediaFLO, DMB (Digital Multimedia Broadcasting), ISDB (Integrated Services Digital Broadcasting), HDTV (High-definition television), DAB (Digital Audio Broadcasting), DRM (Digital Radio Mondiale), etc. Additionally, communication device 212 may also be configured to receive, decode and process transmissions through FM/AM Radio receiver 242, WLAN transceiver 243, and wireless telecommunications transceiver 244. Transceivers 243 and 244 may, alternatively, be separated into individual transmitter and receiver components (not shown). In one example, transceiver 244 may include a broadcast receiver (not shown) and a backward channel receiver (not shown) for communicating over the broadcast channel and the backward channel, respectively. Additionally, communication device 212 may further include a navigation engine for determining a position of communication device 212. In one example, the navigation engine may include Global Positioning System (GPS) receiver 245 for receiving position information from a GPS satellite (not shown). The receiver and transmitter components, e.g., transceiver 244, may be configured to transmit user input and other data (e.g., user selections of profiles, purchase requests, requests for information, user behavior/actions, etc.) to a server and receive data such as product recommendations, price quotes, user profile information and the like from the server.

According to one aspect, communication device 212 may receive Radio Data System (RDS) messages. Other transmission and reception systems may also be used including BLUETOOTH®, WiMAX (Worldwide Interoperability for Microwave Access) i.e., Institute of Electrical and Electronics Engineers (IEEE) 802.16 standard, or UWB (Ultra-wideband) transceivers. In one or more instances, signals may be transmitted to and received from another mobile terminal (not shown). For example, audio, video and other signals may be transmitted between two communication devices using various transmissions protocols such as wireless local area networks (WLANs), General Packet Radio Service (GPRS), third generation mobile system technology (3G), Bluetooth or Universal Plug and Play (UPnP). Such networks may be used to access or support local networks or remote networks such as the Internet.

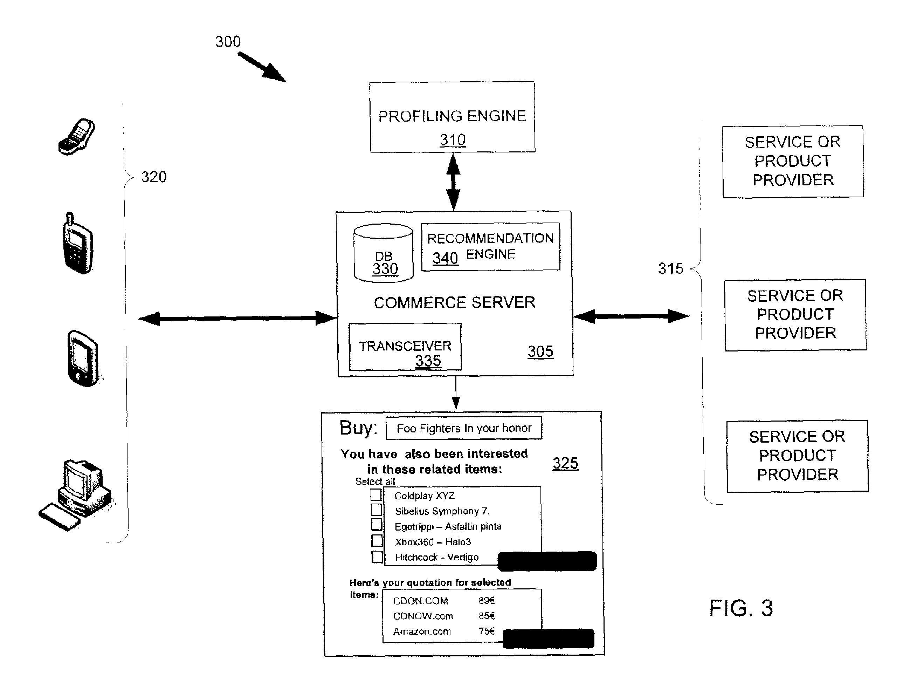

FIG. 3 illustrates a block diagram of a system for facilitating electronic commerce. System 300 may include commerce server 305, profiling engine 310, product/service providers 315 and user terminals 320. Commerce server 305 may be associated with a particular product/service provider or may be associated with a communication service provided to one or more of terminals 320. Commerce server 305 may include a variety of modules including recommendation engine 340, database 330 and transceiver 335. Transceiver 335 may be configured to transmit and receive data from a variety of destinations and sources, respectively, including user terminals 320. Such data may include price quotes, product recommendations, purchase requests, user profiles, user selections of one or more profiles and the like. User terminals 320 may include a variety of devices including PCs, mobile terminals (e.g., mobile terminal 212 of FIG. 2) and PDAs. Each of terminals 320 may be registered or otherwise associated with commerce server 305, which may be configured to track and store actions performed by terminals 320. Activities that are tracked may include widget bookmarks, visual radio activity, searching, website bookmarks, bookmark selection, toolbar searches, shopping selections, advertisement selections, service or product registrations, RSS news viewing, Uniform Resource Identifier (URI) navigation and selection of links (e.g., in a browser).

In one or more arrangements, user actions may be stored in a user action database, e.g., database 330, in commerce server 305. User actions may be associated with the terminal on which the action was performed or with a user that performed the action or a combination thereof. Additionally or alternatively, a user or terminal may be able to define what actions may or should be tracked by commerce server 305. Thus, a user may specify that only purchases, bookmarking and reading RSS feeds should be tracked. This may provide a level of privacy that may be controlled by the user. The user actions detected by commerce server 305 may subsequently be sent to profiling engine 310 which is configured to generate user profiles based on the user actions. Profiling engine 310 and commerce server 305 may be components of a single server or device or may be separate devices. A profile may be used to specify user identification information, user interests, user behavior patterns (e.g., purchase patterns) and the like. User profiles may be created for individuals, companies, groups of individuals (e.g., families, friends, social groups, community groups, etc.) or other organizations. Using the profiles, commerce server 305 and recommendation engine 340 may identify one or more products that a user may be interested in and make recommendations. Recommendation engine 340 may include one or more processors for processing data (e.g., user interests or user behavior) and generating recommendations based on the processed data. Product recommendations may also be generated using a combination of a user profile and a service provider profile.

A service provider profile, as used herein, refers to a profile configured to store actions performed by a plurality of entities at the service provider and interests inferred therefrom. A user profile, in contrast, is a personal profile specifying the interests of a single entity and is generally not associated with a service provider. Thus, a service provider profile may identify one or more other products in which a purchaser of a product may be interested based on the behavior and interests of previous purchasers of the same product.

Additionally or alternatively, commerce server 305 may be configured to generate a purchasing front-end or user interface (UI) such as UI 325 configured to display any identified product or service recommendations. For example, UI 325 may be generated by one or more processors (not shown) of commerce server 305 based on recommendations generated by recommendation engine 340. Recommendation engine 340 may further be configured to filter recommendations based on one or more profiles. Further, commerce server 305 may solicit bids using transceiver 335 from product/service providers 315 for a product a user has already committed to purchasing. This may increase competition between product/service providers 315 and allow the user to obtain the best price for a given product without having to navigate to each product/service provider's commerce site.

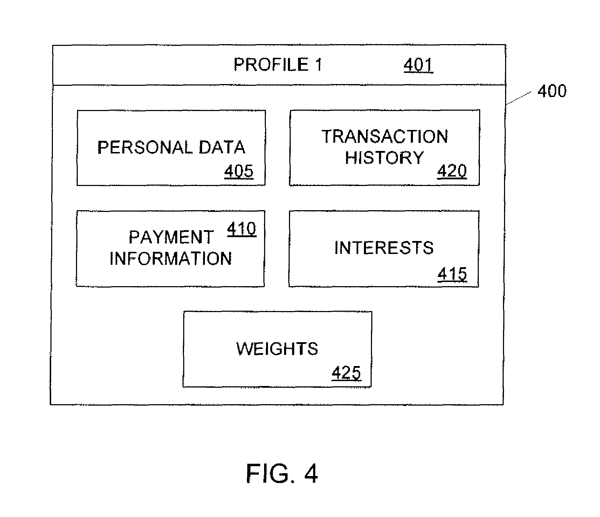

FIG. 4 illustrates a block diagram of a user profile having profile name or ID 401. User profile 400 may include a variety of information including personal data 405, payment information 410, interests 415 and transaction history 420. Personal data 405 may include a full name of the user to which profile 400 corresponds, an address, phone number, date of birth or combinations thereof. Payment information 410, on the other hand, may include credit card numbers, checking account numbers, an account balance, a billing address and the like. Interests 415 may store information about a user's interests such as names of bands, authors, music/video/book genres, a profession, a technology and the like. Interests may be user-specified or automatically determined or inferred based on user actions as discussed in further detail below. Transaction history 420 may include a history of previous transactions (e.g., purchases) made by the user. User profile 400 may further include weight information 425 associated with one or more interests. Alternatively, in one arrangement, weights assigned to interests may be stored in association with a corresponding interest in interests section 415 of the user profile.

A user profile (e.g., profile 400) may be created manually, automatically or a combination of both on a server like commerce server 135 (FIG. 1) or may be created locally on a user's device. For example, a user may create an initial version of his or her profile by specifying some representative interests and entering personal data. The profile may then be updated automatically based on determinations made by a system like a commerce server or manually by the user.

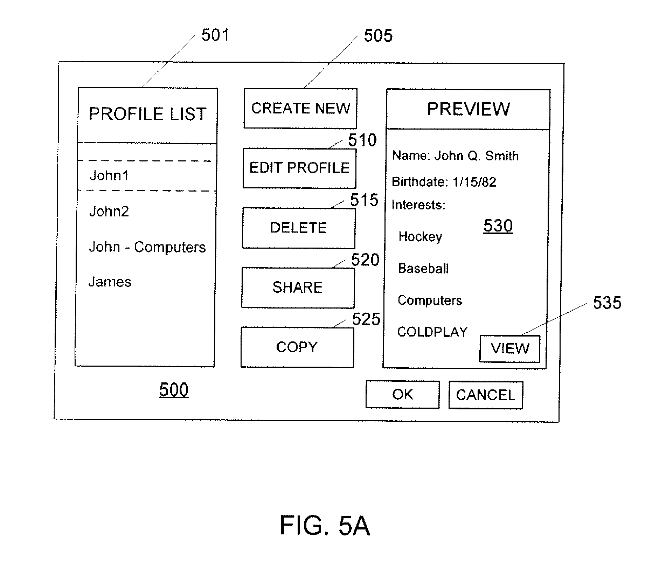

FIG. 5A illustrates a user interface for managing user profiles. Management user interface 500 includes profile list 501, a create new profile option 505, edit profile option 510, delete profile option 515, share profile option 520 and copy profile option 525. Profile list 501 may include all profiles available to a user for selection. In one arrangement, profile list 501 might only include profiles associated with a single user. A user may have multiple profiles for different occasions, product types, spending ranges, levels of sharing, and the like. Create new profile option 505 allows a user to create new profiles by entering key words, links, applications (e.g., widgets), songs, videos and the like to identify interests. In one example, a user may enter the word "software" to add an interest in software to his or her profile. Edit profile option 510 allows a user to edit an existing profile. A user may thus edit contact information, payment information, interests and the like if information has changed or if, for example, an interest was entered incorrectly. If a profile is no longer desired, the profile may be deleted using option 515.

Additionally or alternatively, a profile may be shared by selecting share profile option 520. Upon selecting option 520, the user may be prompted to select or enter the identification of one or more other users with which the user wishes to share a profile. The identification may include a phone number, an instant messaging screen name, a device ID, an e-mail address and the like. Further, copy profile option 525 may be included so that a user may replicate another profile. Such an option may be used if a user wants to make minor changes to an existing profile without deleting the existing profile. Various other options may also be included in a profile management interface.

A preview pane 530 may also be provided in interface 500. Preview pane 530 allows a user to view some information associated with a selected profile upon selection from profile list 501. Preview pane 530 further includes a view option 535 that allows a user to view the entire profile upon selection. Preview pane 530 may be resized or turned off depending on the preferences of the user.

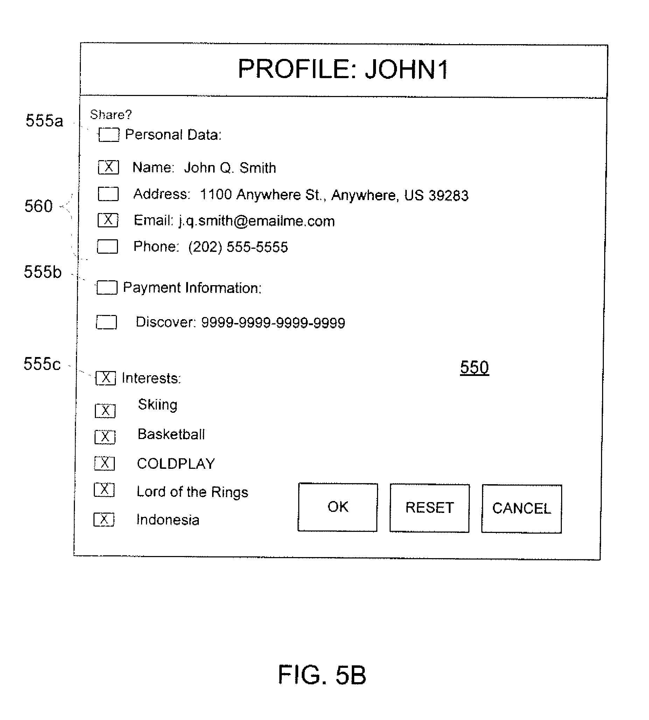

FIG. 5B illustrates a share management interface 550 that allows a user to select which pieces of profile information are shared to other users upon selection of share option 520 in FIG. 5A. Interface 550 includes a list of various data included in a profile including personal data, payment information and interests. Share selection boxes 560 are located adjacent to each piece of information to allow a user to selectively choose which pieces of information are shared and which are kept private. Master share options 555 may be used to share all information or hide all information in a particular category such as personal data, payment information and/or interests. For example, by selecting master share option 555c, all interests may automatically be selected for sharing.

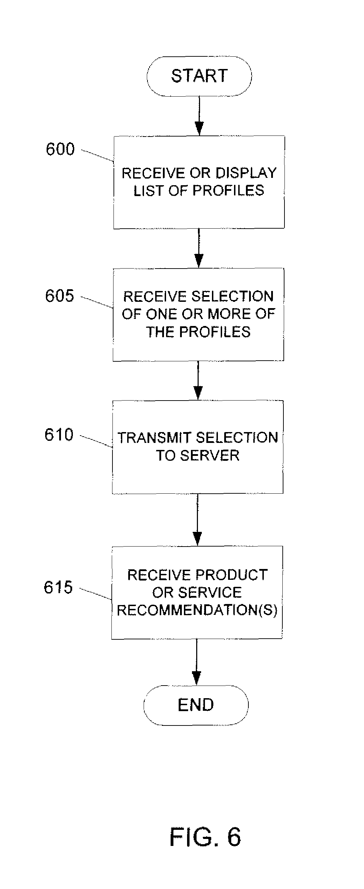

In one or more arrangements, a user may be allowed to select and use the profile of another user or entity when browsing or shopping. For example, if a father is shopping for his daughter, the father may select and use the daughter's profile to receive product or service recommendations corresponding to her interests (i.e., rather than his own). FIG. 6 illustrates a method for determining recommendations based on a selected profile. In step 600, a terminal may receive or display a list of profiles from which a user of the terminal may select an active profile. An active profile refers to a profile that is used in the course of electronic commerce (e.g., a shopping session). In one example, the list of profiles may be stored in a memory of the terminal. Alternatively, the list of profiles may be stored at a remote server. In step 605, the terminal may receive a selection of one of the profiles in the list (e.g., via a user interface system 230 of FIG. 2). The selected profile, in one or more arrangements, may correspond to a user or entity other than the user of the terminal. The selection may then be transmitted to a commerce server in step 610 (e.g., via a transceiver such as transceiver 244 of FIG. 2). The commerce server may include a database of profiles, in which case, only an identification of the selected profile (e.g., an ID number) might be transmitted. Alternatively, the entire selected profile may be transmitted to the server. Additionally or alternatively, a user may be allowed to select a portion of a profile that is less than the entire profile. For example, a terminal may receive a user selection of only music interests of a particular profile. In another example, a user may select only food interests of the user's relative's profile if the user is interested in purchasing a food item for that relative.

In step 615, the terminal may receive one or more product or service recommendations based on the selected profile from the commerce server (via transceiver 244 of FIG. 2). For example, a boyfriend may receive recommended products directed to his girlfriend by using his girlfriend's profile during the course of shopping at a provider's site. Alternatively or additionally, product or service recommendations may be received in the form of advertisements. The recommendations may further correspond to one or more criteria including a selected provider, category of goods, price range, age range, color and the like. In one example, the user of the terminal may manually define or select one or more of these criteria.

As discussed, profiles may further be shared between devices and users. That is, a user may transmit the user's own profile or another profile stored in the user's device to another user or device. Thus, if a woman's husband wishes to purchase a gift for her, he may obtain the wife's profile to receive recommendations for suitable gifts using his own terminal (i.e., without having to use his wife's device). In one arrangement, a user may specify portions of a profile that may be shared, while other portions may be kept private. Thus, in one configuration, when sharing a profile, only the "shareable" portions of the profile may be transmitted to another user or device. Additionally, user profiles or portions thereof that are identified as private may still be used. That is, a first user may use the profile of a second user without having access (e.g., viewing, editing, etc.) to one or more details stored in the profile of the second user. For example, a user may allow a friend to use the user's profile to make purchases or receive recommendations but prevent the friend from seeing details of the user's profile. Such a feature or option may allow user to distribute his or her profile to others without having to disclose private information (e.g., a shirt or pant size).

In one or more embodiments, a contact list and/or address book may include a field for specifying a user's right to use a profile of a particular person. Thus, a user may be able to identify profiles that the user is allowed to access by viewing the user's contact list or address book. In one example, such access or user right information may be transmitted along with an electronic business card or other electronic contact information package received from a corresponding user. A sending user's electronic business card may specify the receiving user's access rights to one or more profiles of the sending user. Additionally or alternatively, an electronic business card may include a profile (or a portion thereof) to which a receiving user is allowed access.

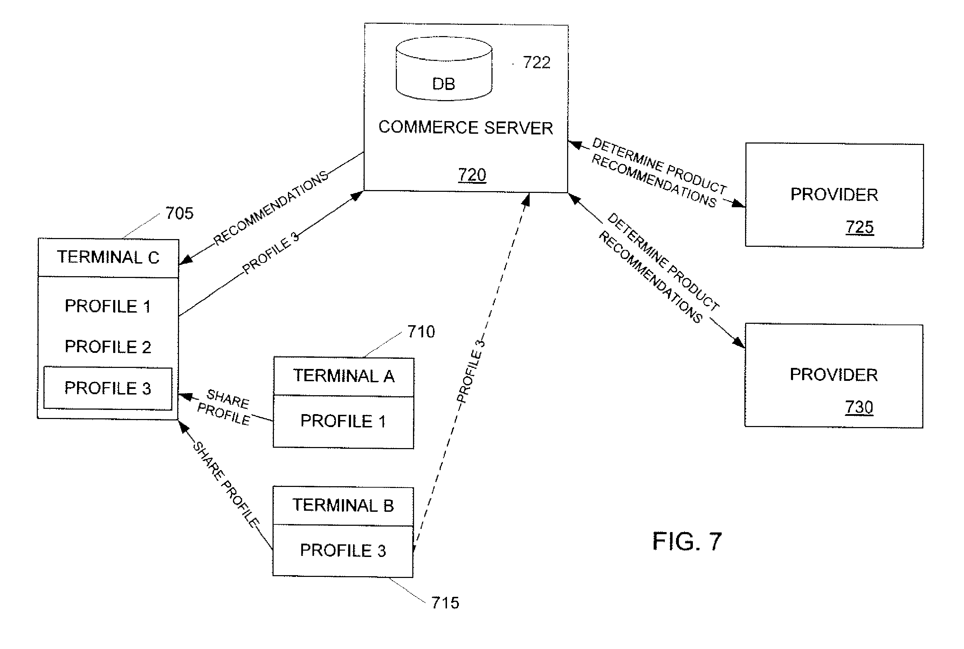

FIG. 7 illustrates a block diagram of a profile selection system whereby a user using terminal 705 may select a profile from profiles corresponding to terminals 710 and 715. In one arrangement, user profiles such as profiles 1 and 3 may be transmitted from terminals 710 and 715 to terminal 705 prior to or upon a user of terminal 705 selecting profile 3. The selection of profile 3 may then be sent to commerce server 720. If commerce server 720 does not have the selected profile, profile 3, the commerce server may receive the profile from either terminal 705 or terminal 715 from which profile 3 originated. Commerce server 720 may then use the selected profile (i.e., profile 3) to determine product or service recommendations from each of providers 725 and 730. The determined recommendations may then be sent to terminal 705. In one example, as the user of terminal 705 is browsing or purchasing a product at provider 725, commerce server 720 may identify one or more other products in which the user might be interested based on selected profile 3. If commerce server 720 is associated with provider 725 or 730, the recommendations may be displayed in a portion of provider 725 or 730's site. Alternatively, if commerce server 720 is not associated with provider 725, recommendations may be listed in a separate area such as a pop-up window.

Commerce server 720 may further include a database 722 configured to store user accounts, actions, profiles, service provider information and the like. For example, database 722 may include a user account database, user action database and a user profile database. New user actions detected by server 720 may be stored in a user action database of database 722 based on a user account ID, a terminal ID and the like. Weights assigned to interests or user actions may also be stored in database 722 in association with the corresponding profile. User actions and user profiles may be associated with a user account. Alternatively or additionally, user actions and user profiles may be stored as part of a user account (e.g., in a user account database).

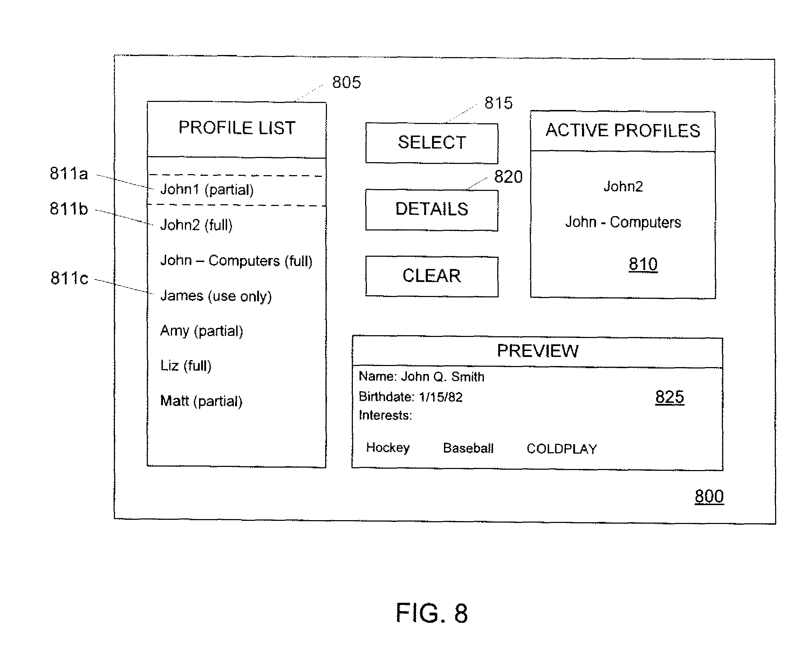

FIG. 8 illustrates a user interface for selecting user profiles. Selection interface 800 includes a selection menu displaying a list of profiles 805 that are available to a user. For example, the list of profiles may include profiles that have been shared with the user. Active profile section 810 may display the currently active profile or profiles (i.e., the current profile(s) being used for determining product or service recommendations). Selection option 815 may be used once one or more of the profiles in list 805 have been selected. Once option 815 has been activated, active profile section 810 may be updated with the selected profiles. In one or more instances, list of profiles 805 may indicate how much of a profile is available to the user. For example, profile 811a may indicate that the profile available to the user is only a partial profile (i.e., less than the entire profile of a corresponding user). In another example, profile 811b may indicate that the corresponding user's full profile is available to the user. Further, profile 811c may indicate that the corresponding profile is use only; that is, a user may use but not view the details stored in the profile. Additionally, details option 820 may be included to allow a user to view the shared details of a profile. Details may include user actions, contact information, interests, shopping sites frequented and the like. Initially, however, a preview may be shown in preview pane 825. Preview pane 825 may show only a subset of the information stored in the selected profile.

Further, multiple profiles may be selected and used at once to generate product or service recommendations that are common to the multiple users or entities associated with the multiple profiles. In one example, upon generating product or service recommendations according to a first selected profile, the recommendations may then be filtered using a second selected profile thereby creating a list of recommendations that correspond to both sets of interests. Such a method and system may be used, for example, when buying a gift suitable for a couple.

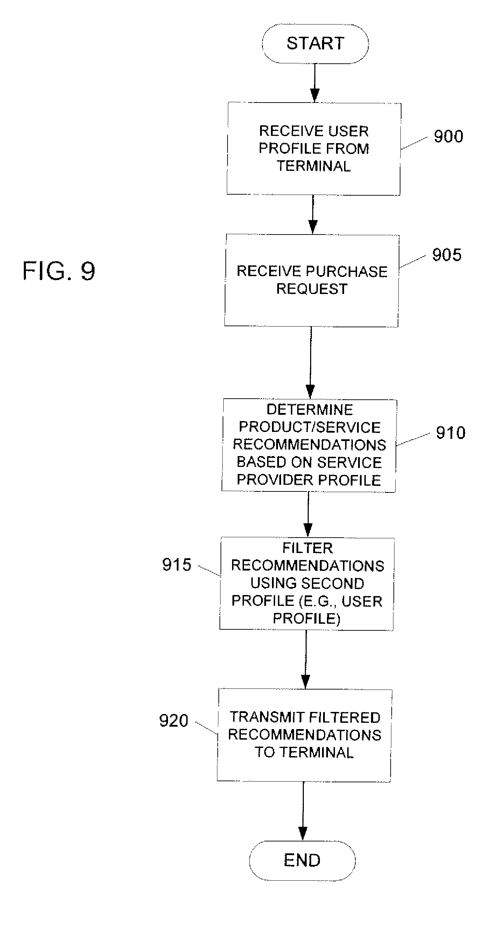

FIG. 9 is a flowchart illustrating a method for generating product or service recommendations based on a multiple profiles and, in particular, a user profile and a service provider profile. In step 900, for example, a commerce server may receive (e.g., through transceiver 335 of FIG. 3) a user profile associated with a user of a terminal. The user may be an individual or a group or other organization. In step 905, the commerce server may receive a purchase request for a product or service from the terminal. The desired product may be an advertised item or service or may be a non-advertised different product or service. The purchase request may further specify a particular service or product provider from which a user of the terminal wishes to purchase the product or service.

In response to the purchase request, the commerce server may determine one or more product or service recommendations based on a service/product provider profile in step 910. For example, the commerce server may make such a determination using a recommendation engine such as engine 340 of FIG. 3. The service/provider provider profile may include information such as the purchase or browsing history or interests of other users that have purchased or expressed interest in the same product or service. For example, interests of other users who have purchased the same product or service may be identified based on their user profiles. Upon determining the one or more product or service recommendations using the first profile (i.e., the service provider profile), the commerce server may then filter the recommendations using a second profile (i.e., a user profile of the purchasing user or terminal) in step 915. The filtered list of recommendations may then be transmitted to the terminal in step 920. Filtering may be used to refine a recommendation list or to limit the number of items displayed in a recommendation list. Filtering may also be used to avoid remove recommendations from a list generated by a service provider profile that are not of interest to a user. Thus, the use of two profiles (i.e., the service provider profile and the user profile) may produce more accurate and relevant recommendation results. It is to be understood that the use of multiple profiles is not restricted to one user profile and one service provider profile but may include multiple user profiles, multiple service provider profiles and/or combinations thereof.

Additionally or alternatively, a commerce server may further be configured to seek price quotes from multiple service or product providers to survey a pricing landscape for a consumer. In one arrangement, a commerce server may solicit quotes from one or more providers other than an original provider to which the purchase request was directed. In response, the one or more providers may send price quotes to the commerce server or directly to a consumer's terminal. According to one aspect, the commerce server might only display a selected number of quotes. For example, the server might only display the lowest 3 or 4 quotes. In another example, the quotes may be selected based on the reputation of the providers associated with the quotes (e.g., quotes only from providers with at least a 4 out of 5 star reputation). The price quote comparison may be performed by one or more modules of the commerce server including recommendation engine 340 of FIG. 3, a processor, another module and/or combinations thereof.

Additionally or alternatively, a commerce server may facilitate a revenue sharing scheme wherein revenue generated by the sale of a product may be shared between an originally specified provider and another provider ultimately selected for competing the purchase. For example, the originally specified provider might receive a redirect share (i.e., a share or credit given for redirecting the user to the selected provider) of the revenue. If, however, the selected provider is the originally specified provider, revenue sharing might not be used.

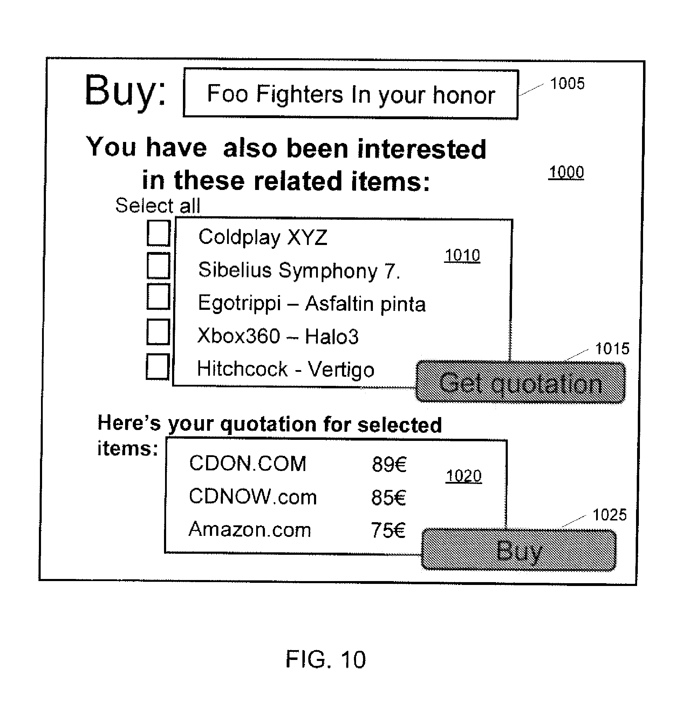

FIG. 10 illustrates a user interface for displaying product recommendations and price quotes. Purchase interface 1000 may display a product that a user is purchasing or considering purchasing in purchase block 1005. In addition, a list of recommended products or services 1010 may also be included. An option to obtain a quotation for one or more of the recommended products or services 1010, e.g., get quotation option 1015, may also be included in purchase interface 1000. Further, price quotes 1020 from multiple providers may be provided with buy option 1025 to allow a user to purchase the product at a selected price and provider.

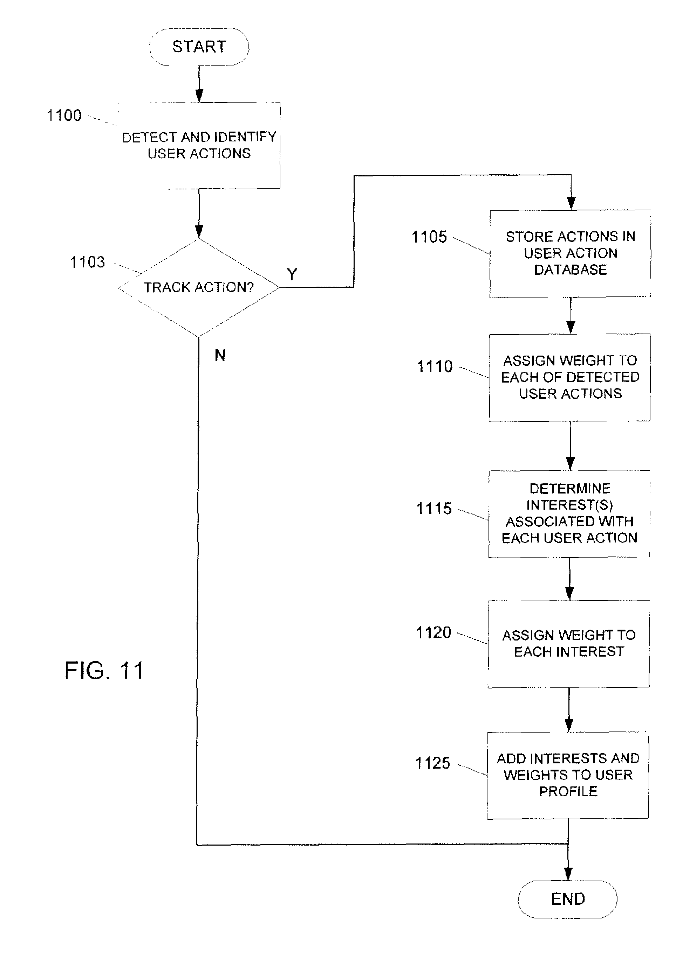

Profiles may be generated in a variety of ways using a variety of different types of information. In one arrangement, a profile may be created based on historical behavior of a user to which the profile corresponds. Historical behavior may include a browsing history, a purchase history, bookmarking history, content viewing/listening history, searching history and/or combinations thereof. FIG. 11 illustrates a method for tracking user actions and generating a user profile based on user actions. The method may, in one configuration, be performed by a profiling engine such as profiling engine 310 of FIG. 3. In step 1100, for example, user actions may initially be detected and identified by a server. User actions may be detected via software, installed on a user terminal and configured to provide the server with updated information regarding the user's actions (e.g., browsing or searching activity). In one example, user actions may be tracked via cookies. Alternatively or additionally, user actions may be detected and identified if a user is using a server's service (e.g., a search engine or web browser). For example, a wireless service provider may be able to track traffic going to and from a user's wireless terminal. Upon detecting and identifying the user actions, the actions and, optionally, associated information may be stored in a user action database (e.g., database 330 of FIG. 3) in step 1105. In one arrangement, the actions may be stored in the database in association with a user ID, a device ID, other account identification information and/or combinations thereof. Other information that may also be stored in the database include a device type corresponding to a terminal used to perform an action, a time of day or an application used to perform the action. A server may optionally determine whether a detected user action should be tracked in step 1103. Such a determination may be made based on user specifications. For example, a user may specify that web browsing or instant messages are not to be tracked. If a detected action falls under the category of actions that are not to be tracked, the process may end.

If, however, tracking of the action is allowed, the server may assign a weight to a detected user action based on various criteria in step 1110. Weights may be assigned and used to indicate a level of interest or relevance of the user action or of interest. For example, assigning weights to user interests derived from a user action database may facilitate the formulation of product or service recommendations by understanding a user's relative strength of interests. Alternatively or additionally, assigning weights to user actions and interests may be used to provide more targeted and relevant searching. That is, when a user performs a search, the search results may be filtered using the weights assigned to each of the user's interests. Weighting criteria may include an amount of time associated with a particular user action (e.g., time spent reading an article), a follow-up action (e.g., selecting a page within a particular site after selecting a link to the site), an application used, a type of action, a device used, a content type, a site hierarchy and the like. The weighting criteria used may collectively be referred to as a context in which an action is performed.

The various criteria and associated weights may be defined by a user, by a server and/or combinations thereof. For example, a user may specify the action types or other context attributes that are to used in weighting and assign a weight corresponding to each action type or context attribute (discussed in further detail below). Alternatively or additionally, a server or recommendation system may set default context attributes and assign default weights. Weights may change over time automatically based on changes in user actions or behavior or manually based on user-specified changes. In another example, a user may assign a weight as he is performing various activities such as navigating a website. Thus, a user may, while viewing a web page, select or enter the weight he finds appropriate, e.g. between 0-100, for that web page. Methods of assigning weights to user actions and interests are discussed in further detail below.

According to one aspect, a user may create a user account with a commerce service provided by a commerce server. The user account may store a variety of information including user profiles, a user action database and settings information such as criteria and weighting preferences. User accounts may be created and stored in a commerce server database such as database 722 of FIG. 7. User account information may also be stored locally in a user's terminal to allow local modification of the information without being connected to the service. However, in some instances, the modified information may need to be updated to the service before the changes taken effect.

In step 1115, the server may determine a subject or interest associated with the identified user action. The server may determine user interests using a variety of methods including using natural language analysis of a bookmarked page, parsing the title of a content item (e.g., an MP3 or video) played, extracting a universal product code (UPC) of a product purchased and the like. In one example, the server may infer a user interest based on one or more detected user actions. Additionally, a weight may be determined for and assigned to each determined subject or interest in step 1120 based on the weights of user action or actions from which the interest or subject was determined or inferred. For example, if a user bookmarks a site dedicated to the band MATCHBOX 20, MATCHBOX 20 may be identified as a music interest in the user's profile. Further, if the user spent a relatively large amount of time browsing the MATCHBOX 20 site, the weight of the user's interest in MATCHBOX 20 may be relatively large. In step 1125, the determined interests and their associated weights may be added to a user profile.

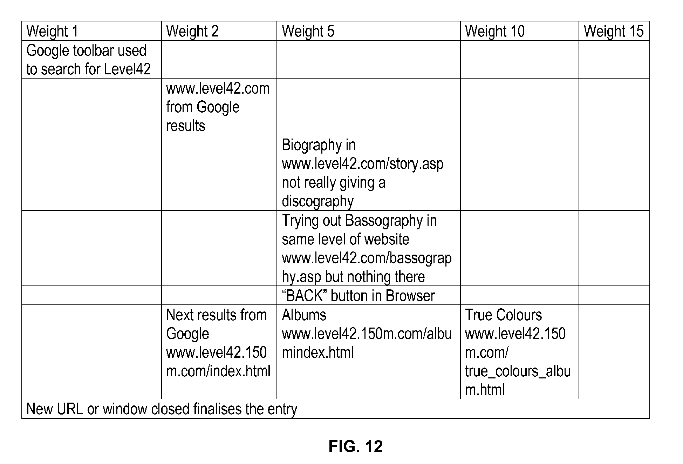

As discussed, user actions and interests may be weighted using various methodologies. FIG. 12 illustrates one system for weighting sites visited by a user based on a hierarchy of the sites or pages within a site. That is, a user's navigation through a particular site is tracked and the pages within the site are weighted differently based on a visited page's position in the hierarchy. Thus, a user's search for the band LEVEL42 may be classified as weight 1 due to the search being the root of the navigation to a final destination page. The various sites identified in the search results such as www.level42.com and www.level42.150m.com/index.html may both be classified as weight 2 sites or pages as they represent the next level in the navigation hierarchy. Accordingly, the weight 5 classification includes pages/sites that are derived or linked from the weight 2 sites. Similarly, the weight 10 classification includes the site/page www.level42.150m.com/true_colours_album.html linked from the weight 5 site/page www.level42.150m.com/albumindex.html. Pages or sites deeper in the navigation or site hierarchy may be weighted more heavily based on a presumption that a user would not navigate so deep into the site without being more interested in those pages or sites than the parent sites or pages. The various weight classifications may correspond to the strength or relevance of a corresponding interest. Thus, in the above example, the weight 10 classification may correspond to an interest relating to LEVEL 42's "True Colours" album, while the weight 5 classification may correspond to LEVEL 42 albums in general.

Once a user ends a navigation path or session, e.g., by entering a different URI, starting another search or closing the browsing window, the database entry for the user action (i.e., accessing the visited pages/sites) may be finalized and added to the database. In one arrangement, only the last page/site visited in the navigation path or session may be added to the database. Alternatively, only the visited page/site with the highest weight may be added.

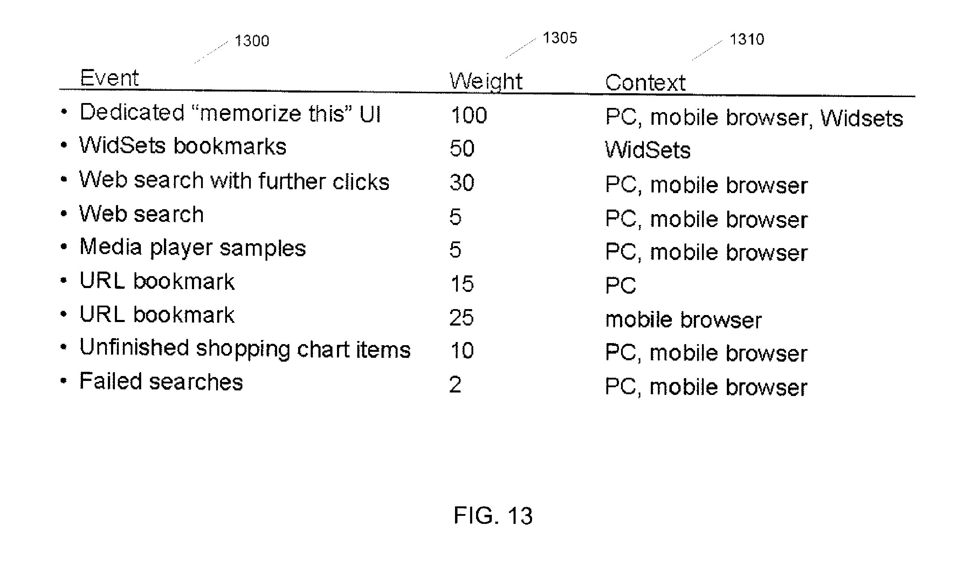

FIG. 13 illustrates a method for weighting user actions based on context and an action type. Event column 1300 includes a list of action types such as a URI bookmarking, a widget bookmark, a web search with additional selection, a web search without additional selection, media player sampling, failed shopping and failed searches. Weights 1305 may be assigned based on a context 1310 associated with the one or more events or user actions. In the illustrated example, the context may correspond to a device type (e.g., PC or mobile browser) or an application (e.g., WIDSETS provided by NOKIA INC.). However, context, as used herein, may refer to any attribute associated with the performance of an action. Thus, different weights may be assigned for the same action type depending on other contextual attributes such as the device used or the application used to execute an action of that action type. For example, bookmarking on a PC may be given less weight than bookmarking on a mobile browser if the mobile browser has less storage or bookmarking space. Accordingly, bookmarking on a mobile browser may be interpreted as being indicative of a stronger interest (since the user must choose bookmarks more selectively) than bookmarking on a PC.

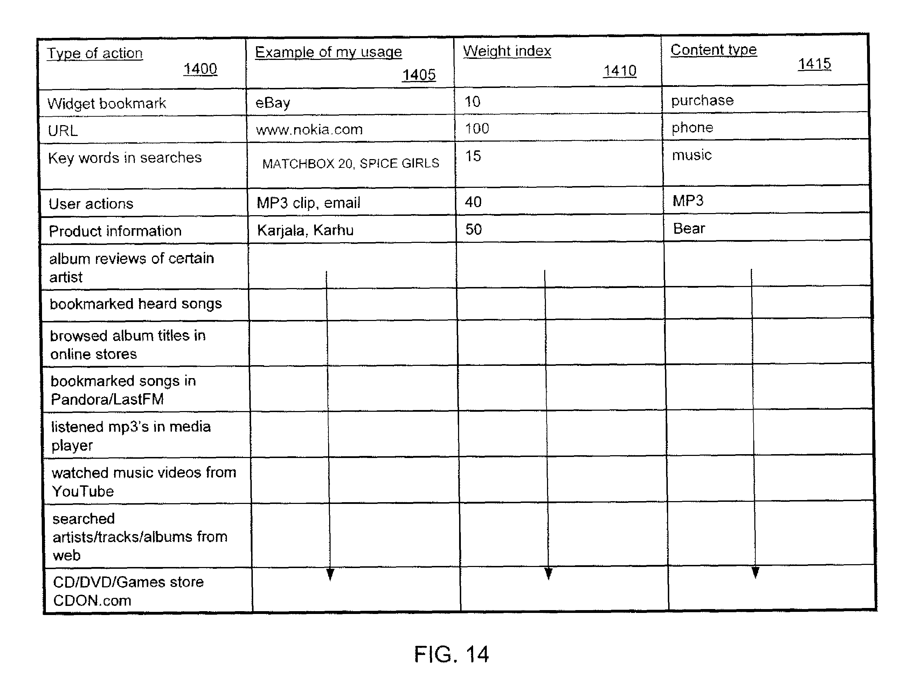

FIG. 14 illustrates another weighting table including a type of action, an example of usage, a weight index and a content type. Type of action column 1400 may include a variety of actions including widget bookmarking, URL navigation, key word searches, viewing product information, viewing album reviews, listening to music content, purchasing products and the like. The specificity or generality of a type of action may be determined by a user or may be based on predefined action types set by the system. A user may also add or delete action types depending on his or her preferences. Examples of usage column 1405 may include sites, applications or content items that correspond to a user's past performance of an action of the action type. For example, a widget bookmark may be associated with the example of EBAY if a user has bookmarked an EBAY widget. Content type column 1415 may identify a type of content associated with the type of action and the example usage. Accordingly, a widget bookmark of EBAY may correspond to a purchase content type while a key word search for MATCHBOX 20, SPICE GIRLS and/or AIKON may correspond to a music content type. Similarly, navigation to the URL www.ticketmaster.com may correspond to a ticketed event content type.

Weight index column 1410 may be used to specify a weight associated with each of the action types, content types or examples of usage. Thus, in one example, bookmarking an EBAY widget may be assigned a weight index of 10 while key word searches for MATCHBOX 20 or SPICE GIRLS may be assigned a weight index of 40, representing a stronger interest or relevance to a user's profile. In another example, purchasing tickets to an opera may be assigned an even greater weight index of 75. Weight indices may be assigned in a variety of ways including analysis of user behavior, manual user input and the like.

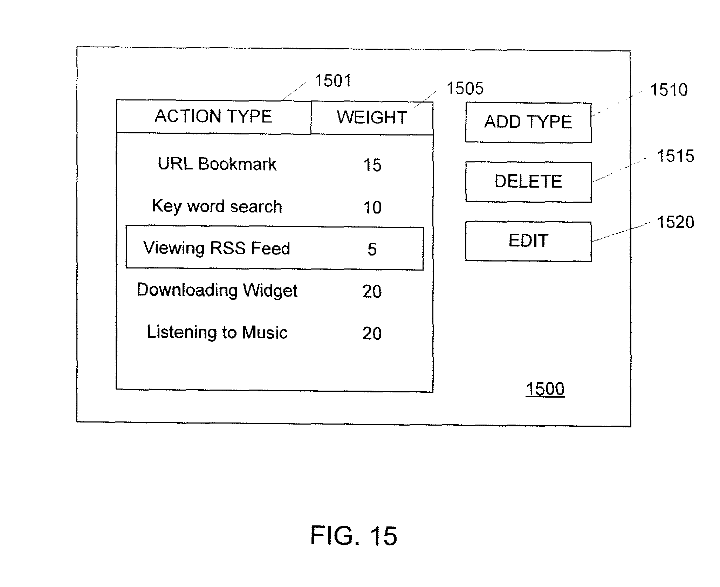

FIG. 15 illustrates a user interface for modifying weights associated with action types. Interface 1500 includes a list 1501 of action types currently defined or selected and a corresponding default weight in weight column 1505. A user may access interface 1500 in a variety of ways including logging into a commerce service and modifying the weight assigned to various actions. Alternatively, the weights and action type information may be stored on a user's terminal and thus, a user may edit the information locally and transmit the changes to a commerce service or system. A user may add other predefined action types by selecting add type option 1510. An action type may also be deleted by selection delete type option 1515. If an action type is not given a weight, the action type may be assigned the lowest weight (e.g., 1) or not be considered in determining interests (e.g., the action is ignored). Edit option 1520 may be used to edit the weights assigned to each action type or to edit the name assigned to the action type (e.g., to make the name more understandable). Such a user interface may be used to modify weights associated with other context attributes as well as to edit weights associated with interests. In one example, weights associated with interests may be edited by editing a corresponding profile.

According to one aspect, list 1501 may also identify the actions or other user actions that are to be tracked. Thus, a user may exert additional control over his or her privacy by controlling what information may be used and tracked to generate a user profile. Thus, a service may know that action types that are not in list 1501 are not to be tracked and actions that are included may be tracked.

According to one or more aspects, a user may have multiple user profiles. For example, a user may have a personal or private profile stored on his or her device as well as a profile for each of multiple electronic commerce sites. Thus, a user may have a profile for an on-line cosmetic store and another profile for an on-line electronics shopping site. In such instances, the profiles may be merged or used together in generating recommendations and search results. In one example, a music interest category may be merged between a user's multiple profiles, creating a master list of music interests. A profile may also be updated in similar manner by reconciling the data of two different profiles. In one or more configurations, a translation module may be used to convert certain profile criteria or categories to facilitate merging or updating of profiles.

The methods and features recited herein may further be implemented through any number of computer readable media that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage and the like.

Additionally or alternatively, in at least some embodiments, the methods and features recited herein may be implemented through one or more integrated circuits (ICs). An integrated circuit may, for example, be a microprocessor that accesses programming instructions or other data stored in a read only memory (ROM). In some such embodiments, the ROM stores programming instructions that cause the IC to perform operations according to one or more of the methods described herein. In at least some other embodiments, one or more the methods described herein are hardwired into an IC. In other words, the IC is in such cases an application specific integrated circuit (ASIC) having gates and other logic dedicated to the calculations and other operations described herein. In still other embodiments, the IC may perform some operations based on execution of programming instructions read from ROM or RAM, with other operations hardwired into gates and other logic of IC. Further, the IC may output image data to a display buffer.

The term "processor" or "processors" in combination with memory should be understood to include any of the foregoing combinations of hardware or software to carry out steps or functions.

Although specific examples of carrying out the invention have been described, those skilled in the art will appreciate that there are numerous variations and permutations of the above-described systems and methods that are contained within the spirit and scope of the invention as set forth in the appended claims. Additionally, numerous other embodiments, modifications and variations within the scope and spirit of the appended claims will occur to persons of ordinary skill in the art from a review of this disclosure.

## Claims

1. A method comprising:
receiving a user selection of at least part of a first purchasing profile from a plurality of purchasing profiles, each of the plurality of purchasing profiles corresponding to a different user; and
receiving a first set of one or more product recommendations, wherein the first set of one or more product recommendations is determined based on the at least part of the selected at least part of the first purchasing profile.

2. The method of claim 1, further comprising:
receiving a user selection of at least part of a second purchasing profile, different from the first purchasing profile, from the plurality of purchasing profiles; and
receiving a second set of one or more product recommendations determined based on the selected at least part of the second purchasing profile, the second set of one or more product recommendations being different from the first set of one or more product recommendations.

3. The method of claim 1 or 2, wherein the first purchasing profile includes one or more interests of a user to which the first purchasing profile corresponds and wherein an interest of the one or more interests is assigned a weight and wherein the weight is determined based on a hierarchy of websites associated with the interest.

4. The method of any of claims 1 to 3, further comprising transmitting the first purchasing profile to a remote server configured to generate the first set of one or more recommendations and receiving the first set of one or more recommendations from the remote server.

5. The method of any of claims 1 to 4, wherein at least a portion of the first purchasing profile is generated based on one or more user actions of a user corresponding to the first purchasing profile.

6. The method of any of claims 1 to 5, further comprising:
receiving a selection of a product;
transmitting the selection of the product; and
receiving a plurality of price quotes for the selected product from a plurality of product providers upon transmitting the selection of the product.

7. A computer program comprising program code means adapted to perform any of steps of claim 1 to 6 when the program is run on a processor.

8. A method comprising:
receiving, from a terminal, a user selection of a first purchasing profile made from a plurality of purchasing profiles, each of the plurality of purchasing profiles corresponding to a different entity; and
determining a first set of one or more product recommendations based on the selected first purchasing profile.

9. The method of claim 8, further comprising:
receiving, from the terminal, a user selection of a second purchasing profile different from the first purchasing profile; and
determining a second set of one or more product recommendations based on the selected second purchasing profile, the second set of one or more product recommendations being different from the first set of one or more product recommendations.

10. The method of claims 8 or 9, further comprising:
receiving a request for a second purchasing profile from the terminal; and
transmitting the requested second purchasing profile to the terminal in response to the request.

11. A computer program comprising program code means adapted to perform any of steps of claim 8 to 10 when the program is run on a processor.

12. An apparatus comprising:
means for receiving a user selection of at least part of a first purchasing profile from a plurality of purchasing profiles, each of the plurality of purchasing profiles corresponding to a different user; and
means for receiving a first set of one or more product recommendations, wherein the first set of one or more product recommendations is determined based on the at least part of the selected at least part of the first purchasing profile.

13. The apparatus of claim 12, further comprising:
means for receiving a user selection of at least part of a second purchasing profile, different from the first purchasing profile, from the plurality of purchasing profiles; and
means for receiving a second set of one or more product recommendations determined based on the selected at least part of the second purchasing profile, the second set of one or more product recommendations being different from the first set of one or more product recommendations.

14. An apparatus comprising:
means for receiving, from a terminal, a user selection of a first purchasing profile made from a plurality of purchasing profiles, each of the plurality of purchasing profiles corresponding to a different entity; and
means for determining a first set of one or more product recommendations based on the selected first purchasing profile.

15. The apparatus of claim 14, further comprising:
means for receiving, from the terminal, a user selection of a second purchasing profile different from the first purchasing profile; and
means for determining a second set of one or more product recommendations based on the selected second purchasing profile, the second set of one or more product recommendations being different from the first set of one or more product recommendations.
